# EUROPÄISCHE PATENTANMELDUNG

(11) **EP 1 376 928 A1**
(43) Veröffentlichungstag der Anmeldung: **02.01.2004**
(21) Anmeldenummer: 02014001.8
(22) Anmeldetag: 26.06.2002
(51) Int. Cl.: H04L 12/24

(54) **Adaptive Steuerung eines Kommunikationsnetzes**

(71) Anmelder: SIEMENS AKTIENGESELLSCHAFT, 80333 München (DE)
(72) Erfinder: Charzinski, Joachim, Dr., 85764 Oberschleissheim (DE); Schrodi, Karl, 82538 Geretsried (DE); Winkler, Christian, Dr., 80796 München (DE)

(57) **Zusammenfassung**

Die vorliegende Erfindung beschreibt die autonome, adaptive Steuerung eines paketorientierten und verbindungslosen Kommunikationsnetzes. Zudem wird die Kopplung von mehreren Netzen adressiert.

## Beschreibung

Der Anmeldungsgegenstand betrifft ein Verfahren zur adaptiven Steuerung eines Netzelementes in einem Kommunikationsnetz und ein Verfahren zur Koppelung mehrerer Kommunikationsnetze.

Es gibt das Konzept, Netzknoten mit von einem Administrator vorgegebenen und in einer Datenbank abgelegten Regeln zu konfigurieren. Dieses 'policy based networking' der IETF (Internet Engineering Task Force) dient zum einen dazu, quasistatische Konfigurationsinformation in die Netzknoten zu laden. Zum anderen können damit auch Konfigurationen, die in Abhängigkeit von konkreten Verbindungswünschen eingestellt werden müssen, zum Anforderungszeitpunkt an die Knoten gegeben werden. Dazu wird eine dem Netz übergeordnete Komponente, der 'Policy Decision Point' PDP eingeführt, der die vorgegebenen Regeln aus der Datenbank lesen und die für die gegebene Situation geeignete Regel heraussuchen kann. In der Folge lädt er eine entsprechende Konfigurationsinformation in das Netzelement PEP (für: 'Policy Enforcment Point').

Wird der PDP nur zur statischen Konfiguration eingesetzt, ist er im Normalbetrieb des Netzes nicht mehr involviert. Die Knoten arbeiten ab dem Zeitpunkt unabhängig von der Netzsteuerung, können allerdings nicht autonom reagieren. Sind dagegen eingehende Verbindungswünsche zu bearbeiten (e.g. RSVP Resource Reservation Protocol), so ist der PDP die zentrale Komponente des Netzbetriebs. Die Regeln in der Datenbank des PDP werden von einem Administrator erzeugt, ggf. automatisch auf Konsistenz geprüft und vom PDP bei Konflikten entsprechend vorgegebener Schemata priorisiert.

Der Erfindung liegt das Problem zugrunde, ein Verfahren zur Steuerung eines Netzelementes eines Kommunikationsnetzes anzugeben, das bei sich ändernden Betriebsbedingungen, wie z. B. Lastveränderung, Leitungsbruch, Knotenausfall, mit einer schnellen autonomen Weiterleitung reagiert.

Das Problem wird durch einen Gegenstand mit den Merkmalen des Anspruchs 1 gelöst.

Erfindungsgemäß wird das autonome Netz über Verhaltensregeln in den Netzelementen gesteuert. Dazu wird dem Netz eine Steuer-Instanz 'Network Control Server (NCS)' übergeordnet, welche diese Regeln erzeugt und die Netzelemente damit konfiguriert. Durch diesen Ansatz arbeitet das Netz ohne den dauernden Eingriff des NCS. Erst wenn auf Grund nachhaltiger, längerfristiger Änderungen der Netzsituation neue, angepasste Regeln benötigt werden, versorgt der NCS die Netzelemente entsprechend neu.

Ausgehend von der Erkenntnis, wonach der Betrieb eines Netzes um so höhere Kosten verursacht, je mehr administrativer Aufwand zu leisten ist, ist der erfindungsgemäße Ansatz eines autonom arbeitenden Netzes von Vorne herein von Vorteil. Die hier beschriebene Methode, die Regeln für das Netz automatisch zu erzeugen, minimieren die Betreiberkosten bei gleichzeitiger Erhöhung der Netzverfügbarkeit. Durch die Kopplung von NCSn mehrerer (Teil-)Netze können auch (Teil-)Netze übergreifend betrieben werden und die vom Benutzer geforderten Qualitätseigenschaften Ende-zu-Ende mit minimalem Administrationsaufwand darstellen.

Das anmeldungsgemäße Kommunikationsnetz weist folgende Eigenschaften auf:
- Das Netz arbeitet paketorientiert und verbindungslos.
- Das Netz weist Netzelemente auf, die unter Verwendung von Regeln autonom arbeiten.
- Unter zu Hilfenahme dieser Regeln können die Netzelemente das Weiterleiten von Paketen gemäß vorgegebener Kriterien (z.B. Dienstqualität) insbesondere auch über mehrere sinnvolle mögliche Wege (z.B. zur gleichmäßigen Lastverteilung) im Normalbetrieb autonom leisten. Darüber hinaus reagieren sie sehr schnell autonom auf Ausfälle im Netz (z.B. Leitungsbruch, Knotenausfall).

Vorteilhafte Weiterbildungen des Anmeldungsgegenstandes sind in den Unteransprüchen angegeben.

Der Anmeldungsgegenstand wird im folgenden als Ausführungsbeispiel in einem zum Verständnis erforderlichen Umfang anhand von Figuren näher erläutert. Dabei zeigen:
- Fig 1: eine schematische Darstellung der Netzelemente in dem erfindungsgemäßen Kommunikationsnetz,
- Fig 2: eine schematische Darstellung der Netz- und Steuerungshierarchie und
- Fig 3: Eingangs- und Ausgangsgrößen der adaptiven Netzsteuerung.

In den Figuren bezeichnen gleiche Bezeichnungen gleiche Elemente.

Die hier dargestellte Erfindung beschreibt die adaptiven Steuerung. Zudem wird die Kopplung von mehreren Netzen adressiert.

Das erfindungsgemäße Netz mit autonom agierenden Netzelementen (im folgenden als autonomes Netz bezeichnet) arbeitet unter Führung einer adaptiven Steuerung aber ohne ihren dauernden Eingriff.

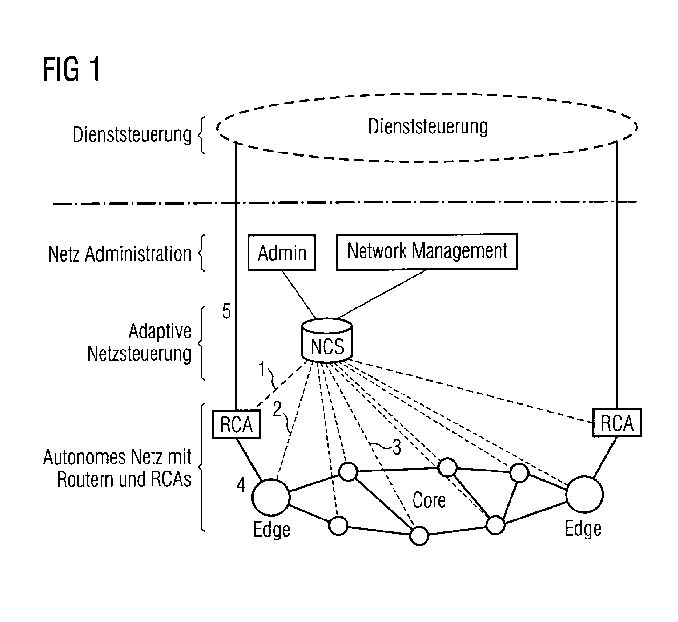

Die Elemente des autonomen Netzes (siehe Fig 1) sind:
- zum einen die Netzknoten, welche den Verkehr autonom vermitteln/weiterleiten (Router), die in Randknoten (Edge Router) und Kernknoten (Core Router) unterschieden werden,
- zum anderen die Ressourcenkontrollinstanzen (RCA), die am Netzrand angeordnet sind.

Die RCAs sind den Randknoten zugeordnet. Ihre Aufgabe ist es, Ressourcenanforderungen (z.B. Verbindungsauf-/-abbau) an einen zugeordneten Ein- oder Ausgangs-Randknoten entgegenzunehmen (z.B. von einer separaten, hier nicht näher beschriebenen Dienstesteuerung (siehe Fig 1, ⑤)) und sie auf Zulässigkeit und Erfüllbarkeit zu prüfen, sie anzunehmen oder abzulehnen. In der Folge versieht die RCA den entsprechenden Randknoten mit Parametern (siehe Fig 1, ④), die es ihm ermöglichen, die Nutzung und Nutzungsüberwachung der Ressourcen einzustellen und die Regeln für die Behandlung der zu dem entsprechenden Verkehrsfluss gehörigen Datenpakete zu konfigurieren (z.B. Marking, Policing, Scheduling).

Die RCAs arbeiten wie die Router an Hand von Verhaltensregeln autonom. Diese Verhaltensregeln beschreiben deren Steuerungsaufgabe und beinhalten explizit oder implizit (z.B. als Berechnungsvorschrift) die an die Edge Router im Betrieb weiterzugebenden Parameter.

Für die Implementierung eines RCA gibt es mehrere Optionen:
- als separater Server
- integriert in einen Edge Router

Dabei kann ein RCA zuständig sein für:
- je einen Edge Router
- für mehrere Edge Router

Die Elemente (Router, RCA) des autonomen Netzes arbeiten nach Verhaltensregeln. Diese können vom NCS an die Netzelemente gegeben oder auch anderweitig, z.B. über das Netzmanagement, konfiguriert werden. Der NCS kann also zuständig sein für:
- CoreRouter (siehe Fig 1,③)
- Edge Router (siehe Fig 1,②)
- RCAs (siehe Fig 1,①)
- jede Kombination

Netz- und Steuerungshierarchie

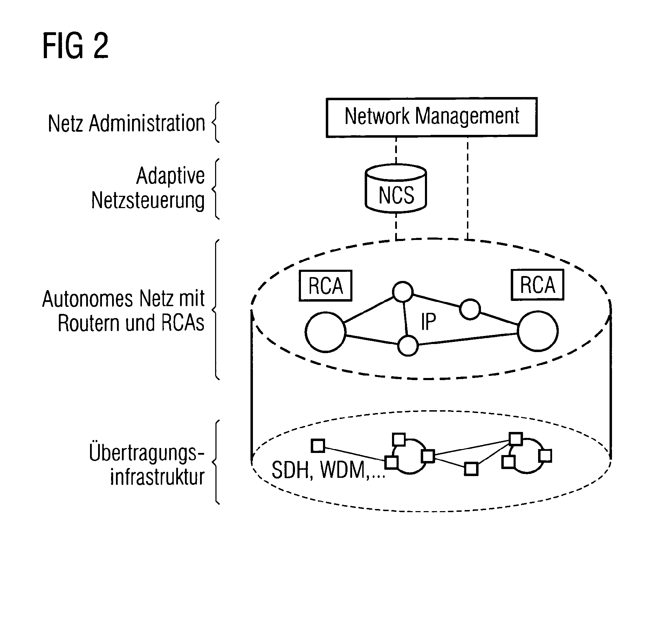

Für die Netz- und Steuerungshierarchie gibt es vier Ebenen, die jeweils unterschiedliche Schwerpunkte/Zielsetzungen bei der Steuerung und ein unterschiedliches zeitliches Verhalten haben. Von unten nach oben sind dies (vgl. Fig 2):
- Die Übertragungsinfrastruktur/Transmission
- Das autonome IP-Netz
- Die adaptive Netzsteuerung
- Das Netzmanagement

Die Übertragungsinfrastruktur ist in erster Linie für die Transmission der Daten zuständig und mag beinhaltet Mechanismen zur sehr schnellen Ersatzschaltung im Fehlerfall (z.B. Leitungsbruch etc.) beinhalten, z.B. bei SDH oder ähnlichen Ansätzen im Bereich optischer Netze. Dies ist eine Steuerungsaufgabe, die durch die Übertragungsinfrastruktur im Bereich von Millisekunden selbständig geleistet wird.

Das oben beschriebene, autonome IP Netz bearbeitet autonom Ressourcenanforderungen, eine Steuerungsaufgabe in Kooperation mit einer Dienstesteuerung, verteilt den Verkehr im Netz und reagiert schnell selbständig auf Fehlerfälle. Dabei werden nur die Fehler bearbeitet, die in der Transmissionsebene nicht bereits behoben werden konnten.

Die adaptive Netzsteuerung (Regelung) hat im Gegensatz zu den unteren beiden Ebenen keine Echtzeitanforderungen. Sie beobachtet das Netz und erzeugt bei signifikanten Abweichungen vom Sollbetrieb neue Regeln. Der Zeithorizont liegt bei Stunden oder darüber.

Das Netzmanagement dient in Richtung des Netzes zur Einstellung der Grundkonfiguration. Es wird also in aller Regel nur in sehr großen Zeitabständen steuernd tätig, z.B. bei Ausbau des Netzes.

Regeln und Regelerzeugung

### A. Quasi-Statische Regeln:

Im einfachsten Fall sind diese Regeln quasi-statisch, hängen also nur von der Netztopologie und den statischen Eigenschaften des Netzes ab.

Im Unterschied zum ,Policy based Networking' werden sie jedoch nicht von einem Administrator fest vorgegeben sondern vom NCS automatisch erzeugt.

Die Basisinformation dazu kann der NCS z.B. vom Netzmanagement und/oder von den Netzelementen selber erhalten. Dazu können gehören: Netztopologie, Leitungsbandbreiten, Eigenschaften der Netzelemente, (bevorzugte) Routen, Verkehrsmatrizen, Verkehrsklassen, usw.

Bei Änderungen dieser Basisinformationen, z.B. Änderungen der Netztopologie, werden die Regeln entsprechend neu berechnet und in die Netzelemente geladen.

Die Regeln werden dergestalt festgelegt, dass das Netz im autonomen Betrieb die oben beschriebenen Eigenschaften sicherstellen kann. Der NCS ist grundsätzlich nicht Teil des Regelbetriebs.

### B. Dynamische Regeln:

Im diesem komplexeren Fall werden die Regeln zusätzlich in Abhängigkeit vom Netzzustand adaptiv geändert bzw. angepasst bzw. erzeugt. Dabei ist festzuhalten, dass die Regeln in einer größeren Zeitskala angepasst werden (z.B. 15 Minuten oder 2 Tage) und das Netz nach wie vor auf dynamische Änderungen (auch Fehler) schnell autonom reagiert.

Für die Regelerzeugung durch den NCS sind zwei Varianten denkbar:
- Der NCS wählt Regeln aus einem Satz von vorbestimmten Regeln entsprechend der Netzsituation aus.
- Der NCS passt zusätzlich die vorbestimmten Regeln entsprechend der Netzsituation an.
- Der NCS erzeugt Regeln entsprechend der Netzsituation.

Informationen aus dem Netz sind z.B. Statistiken über den Verkehr und die Warteschlangen, Fehlermeldungen aus dem Netz, aktuelle Routenführung, usw. So können z.B. drohende dauerhafte Schieflasten (z.B. durch ausgedehnte Ausfälle oder bleibende Änderung des Benutzerverhaltens und der Verkehrsmatrizen) korrigiert werden.

### Informationsgrad und Intelligenz des 'NCS':

Für den NCS sind abgestufte Ausführungsformen möglich, die sich in den Dimensionen Informationsgrad und Intelligenz unterscheiden. Je mehr Information(-squellen) dem NCS zur Verfügung stehen, desto stärker optimierte Regeln kann er erzeugen. Eng damit verzahnt ist die notwendige und mögliche Intelligenz des NCS, die von einfacher Logik über Optimierungs-verfahren und Dimensionierungsverfahren bis hin zu Expertensystem oder Neuronalen Netzen ausgeführt sein kann. Mit zunehmender Information steigt der Bedarf an Intelligenz des NCS.

Mögliche Informationsquellen (auch in verschiedenen Kombinationen) sind u.a. die Netzelemente selber (z.B. Statistikinformation, Netzlast, Routen), das Netzmanagement (z.B. Topologie, Fehlerereignisse), Administratoreingaben, statische und dynamische Basisdaten (z.B. Verkehrsmatrizen).

### Informationsflüsse von/zur adaptiven Netzsteuerung (NCS):

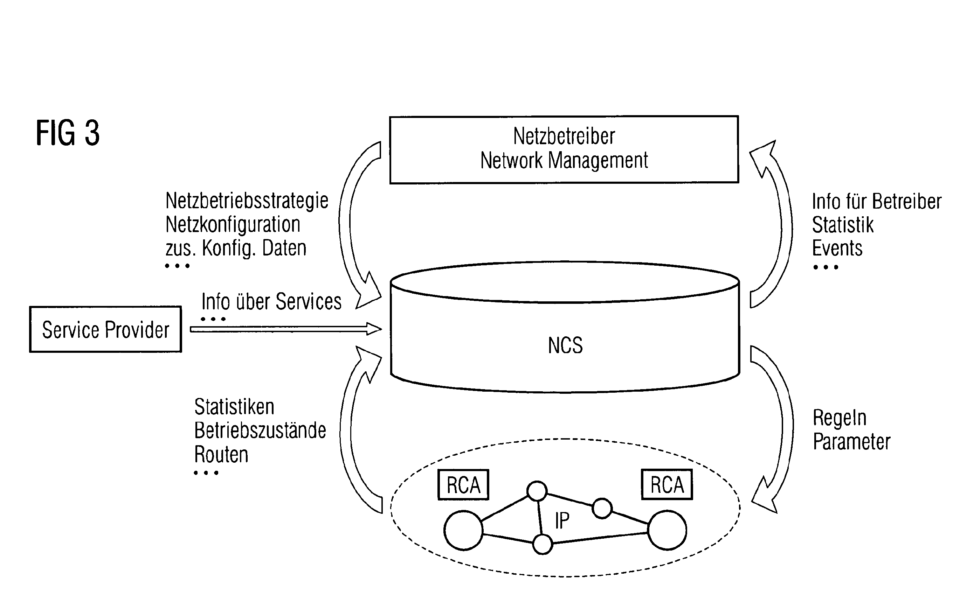

Der NCS bezieht für seine Aufgabe Informationen aus mehreren Quellen und liefert auch Daten an verschiedene Abnehmer (vgl. Fig 3).

Input:
- Netzmanagement/Betreiber (u.a.):
- Netzbetriebsstrategie
- Netzkonfiguration
- zus. Konfigurations-Daten (z.B. speziell zu schützende Netzsegmente o.ä.)

- Autonomes Netz (u.a.):
- Statistiken
- Betriebszustände
- Routen

- Service Provider (u.a.):
- Informationen über Dienste und Applikationen und deren Eigenschaften und Anforderungen

Output:
- Netzmanagement/Betreiber (u.a.):
- Info für Betreiber, z.B. Notwendigkeit des Netzausbaus etc.
- Statistiken
- Events

- Autonomes Netz (u.a.)
- Verhaltensregeln
- Parameter

Kopplung von (Teil-)Netzen
Sollen mehrere Netze, die nach dem beschriebenen autonomen Prinzip arbeiten, eng gekoppelt werden, so dass sie die Eigenschaften des autonomen Netzes wie Lastverteilung, Fehlerreaktion und Dienstgüte übergreifend darstellen können, müssen die Regeln der Teilnetze aufeinander abgestimmt werden.

Dazu werden die für jeweils ein (Teil-)Netz zuständigen NCSs über ein geeignetes Protokoll miteinander gekoppelt und tauschen Informationen zum Abgleich der Regeln aus. Anschließend erzeugen sie wie oben beschrieben, angepasste Regeln und versorgen damit die Netzelemente ihres (Teil-)Netzes.

0ptionen und Erweiterungen
- Jeder Netzknoten bekommt einen individuellen Satz von Parametern / alle Netzknoten bekommen dieselben Parameter zugespielt.
- Die Parameter beinhalten auch die Auswahl eines Algorithmus wenn mehrere Algorithmen zur Behandlung der Aufgabe in Frage kommen.
- Der NCS ist zentral im Netz vorhanden / es gibt eine oder mehrere Backup-Einrichtungen / es gibt mehrere gleichberechtigte Koordinationseinrichtungen, die mit Hilfe eines speziellen Koordinationsprotokolles ihre Regel-Vorgaben abgleichen / verschiedene Bereiche des Netzes werden lokal von verschiedenen NCS gesteuert, die über ein spezielles Kommunikationsprotokoll kommunizieren.
- Die Änderung der Regeln erfolgt abhängig von der Auslastung eines oder mehrerer Links.
- Die Änderung der Regeln erfolgt abhängig von einer beobachteten Dienstgüte.
- Die Änderung der Regeln erfolgt abhängig von in den Netzknoten beobachteten Warteschlangenlängen.
- Der NCS wird eingesetzt, um zusätzlich die Parameter in Einrichtungen zur Verbindungsannahmesteuerung am Netzrand vorzugeben.
- Der NCS kommuniziert mit anderen Network Control Servern in den Netzen anderer Netzbetreiber.
- Der NCS generiert aus den bei ihm vorhandenen Zustandsinformationen (und eventuell weiteren durch Netzmanagement gelieferten Parametern) aktuelle Tarifinformationen, die er an die Transportsteuerung (RCAs) weitergibt.
- Die Kommunikation zwischen Netzelementen und NCS kann vom NCS oder von den Netzelementen ausgehen. Im ersten Fall versorgt der NCS die Netzelemente aktiv mit neuen Regeln und/oder Parametern, sobald diese vorliegen. Im zweiten Fall können die Netzelemente die aktuellen Regeln/Parameter bei Bedarf abrufen. Beide Kommunikationsformen können in einem Netz verwendet werden, wobei sich die zweite insbesondere im Rahmen einer automatischen Konfiguration neuer Netzelemente (z.B. bei Inbetriebnahme oder Neustart) und/oder zur Konfiguration der Kommunikationsparameter für die erste Kommunikationsform anbietet.
- Der NCS berücksichtigt bei der Erstellung der Regeln/Parameter die Einspielreihenfolge der neuen Regeln/Parameter in die Netzelemente. Da nicht alle Netzelemente absolut gleichzeitig neue Regeln/Parameter erhalten können, kann eine solche intelligente Kopplung von Erstellung und Verteilung der Regeln/Parameter helfen, transiente Zustände der Überlast oder Instabilität zu vermeiden.

## Patentansprüche

1. Verfahren zur Steuerung eines Netzelementes in einem Kommunikationsnetz demzufolge
- ein Netzelement eine Mehrzahl von Verhaltensregeln vorhält und
- das Netzelement nach Maßgabe der Betriebsbedingungen eine Verhaltensregel autonom auswählt und Datenpakete entsprechend dieser Verhaltensregel weiterleitet.

2. Verfahren nach Anspruch 1
**dadurch gekennzeichnet, dass**
die Betriebsbedingungen durch eine beliebige Kombination aus Leitungsbruch, Knotenausfall, Netzauslastung, Verbindungsaufbau, Netzumkonfigurierung gegeben sind.

3. Verfahren nach einem der vorstehenden Ansprüche
**dadurch gekennzeichnet, dass**
die Verhaltensregeln für das Netz automatisch erzeugt werden.

4. Verfahren nach einem der vorstehenden Ansprüche
**dadurch gekennzeichnet, dass**
eine Verhaltensregel die Auswahl eines von mehreren Wegen beinhaltet.

5. Verfahren nach einem der vorstehenden Ansprüche
**dadurch gekennzeichnet, dass**
die Verhaltensregeln über das Netzmanagement von einer mehreren Netzelementen übergeordneten Steuer-Instanz (NCS) dem Netzelement zuführbar sind.

6. Verfahren zur Koppelung mehrerer Kommunikationsnetze demzufolge
die Steuer-Instanzen (NCS) zweier Kommunikationsnetze über ein Protokoll miteinander gekoppelt werden, über das sie Informationen zum Abgleich von Verhaltensregeln austauschen.
